# EUROPEAN PATENT APPLICATION

(11) **EP 3 826 195 A1**
(43) Date of publication of application: **26.05.2021**
(21) Application number: 20159195.5
(22) Date of filing: 25.02.2020
(51) Int. Cl.: H04B 7/026, H04W 40/22, H04W 72/12

(54) **CONTROLLING MMWAVE BASE-STATIONS OF A CELLULAR RADIO NETWORK**

(30) Priority: 22.11.2019 EP 19211074
(71) Applicant: Technische Universität Darmstadt, 64289 Darmstadt (DE)
(72) Inventor: ORTIZ JIMENEZ, Andrea Patricia, 64289 Darmstadt (DE); ASADI, Arash, 64289 Darmstadt (DE); SIM, Gek Hong (Allyson), 64289 Darmstadt (DE); KLEIN, Anja, 64289 Darmstadt (DE); HOLLICK, Matthias, 64289 Darmstadt (DE)
(74) Representative: Zahn, Matthias

(57) **Abstract**

In a cellular radio network (200) with mmWave base-stations (201, 202, 203, 204), there are backhaul base-station (201), a fronthaul base-station (204) and some intrahaul base-stations (202, 203). Start base-stations are candidates to receive data from particular base-stations. A computing function (620) collects latency values (631) for intrahaul paths and selects start base-stations based on path-specific end-to-end latency values. While operating for the network as a whole, the computing function processes a plurality of selections from a plurality of base-stations, and determines feasibility in view of a restriction that allows the base-stations to communicate a predefined number of content-data packets per one time-slot only. In the absence of conflicts between the selections, the computing function instructs the particular base-stations to send the data-packets to their selected start base-stations.

## Description

### Technical Field

The description relates to cellular radio networks in general, and to controlling the operation of a cellular radio network with mmWave-band transmitters in particular.

### Background

From a broad perspective, cellular radio networks are collections of base-stations (BS) that communicate with mobile-stations (MS). New networks are being developed at a speed of one generation (G) per decade. In networks up to 4G, the links between base and mobile stations are wireless links (or "radio links") with signals at the VHF and UHF bands (cf. the radio bands defined by the International Telecommunication Union). The base-stations communicate with higher-order systems (such as public systems) by wire-bound links that are often implemented by fiber cables.

With 5G networks the situation changes: the stations have transceivers that can operate at much higher radio frequencies. Some transceivers even reach the EHF band (30-300 GHz). The alternative terminology "mmWave-band" has been established as well. Although the frequency shift allows data communication at relatively large bandwith (for example, 28 GHz carrier and 1 GHz bandwith), the transmitters communicate at relatively short distances only (order of magnitude 100 m). This has consequences, such as the need to deploy base-stations in relatively high density (i.e., number of stations per area), as well as the lack of wire-bound links for all base-stations.

By using a technique called "self-backhauling", some of the base-stations communicate data via peer base-stations over their radio links.

However, there are some dynamics to consider. To name only a few: the radio links between the base-stations are not available all the time (due to blocking, signal attenuation or other reasons) and not all base-stations remain in the network all the time.

Identifying particular self-backhauling stations and triggering their actions at appropriate time points is a computing task that involves an NP-hard problem.

### Summary

An alternative approach is described as a computer-implemented method for operating base-stations with mmWave transmitters of a cellular radio network, as a computing function with entities that are allocated to particular base-stations and with an entity allocated to the network as a whole, as a system with mmWave base-stations being controlled by the computing function, and as a computer program product.

In the network, one base-station is the so-called backhaul base-station that has a backhaul function to provide communication of data-packets with a core system, and at least one base-station is the so-called fronthaul base-station that has a fronthaul function to provide communication with a mobile-station (via a radio link over the antennas of the base-station and of the mobile station), but without acting in backhaul function. Intrahaul paths between the backhaul base-station and the fronthaul base-station are provided by so-called intrahaul base-stations. These base-stations communicate the data-packets sequentially.

The method is performed by the computing function.

In a collecting step, the computing function operates for particular base-stations and collects latency values that are specific for a plurality of intrahaul paths (PATH LATENCY). Start base-stations are base-stations for that the communication ranges overlap with the communication range of the particular base-stations. Start base-stations belong to the paths. The start base-stations are candidates to receive data-packets from the particular base-stations.

In a selecting step, the computing function operates for the particular base-stations and selects start base-stations (SELECTED START STATION). The selection (of the start base-station) is based on the path-specific end-to-end latency values (PATH LATENCY) of the plurality of intrahaul paths.

In a checking step, the computing function operates for the cellular radio network and processes a plurality of selections ({SELECTED START STATION}) from a plurality of particular base-stations. The computing function checks if the plurality of selections is feasible in view of a so-called 1-SLOT-1-DATA restriction. The restriction allows the base-stations to communicate a predefined number of content-data packets per one time-slot only.

In the absence of conflicts between the selections, the computing function instructs the particular base-stations to send the data-packets to their selected start base-stations.

The method steps are performed by a computing function that can be distributed to agents to perform the steps for the particular base-station and distributed to a central entity - a feasibility unit - for the feasibility check of the selections.

### Brief Description of the Drawings

FIG. 1 illustrates two mmWave base-stations of a cellular radio network, as well as illustrates the concept of time-slots;
FIG. 2 illustrates the base-stations together with a computing function;
FIG. 3 is a topology diagram that illustrates communication in a communication system;
FIG. 4 is a topology diagram that again illustrates data communication, but in the context of multiple base-stations having different functions;
FIG. 5 is a topology diagram that again illustrates data communication, but that takes further challenges and constraints into account;
FIG. 6 is a topology diagram that again illustrates data communication, but that takes further challenges and constraints into account;
FIG. 7 illustrates a base-station performing the communication actions receiving and sending, and performing the non-communication action buffering;
FIG. 8 illustrates path selection and scheduling by a sequence of topology diagrams and action matrices;
FIG. 9 illustrates the operation of two agents and a feasibility unit of the computing function by way of example;
FIG. 10 illustrates a flow chart diagram of a computer-implemented method; and
FIG. 11 illustrates a generic computer.

### Detailed Description

### Writing Conventions

As the skilled person is familiar with cellular radio networks and its base-stations, conventional hardware components such as "onboard" processors, memory, input/output units, user interfaces etc. to process data as well as antenna units to communicate data by radio signals are not illustrated in detail.

The description uses the acronyms "BS" for "base-station" and "MS" for "mobile-station" in singular number only, but does not use the acronyms for plural numbers. The term "storing data" is differentiated into "buffering" during time-slots, and "keeping" over a longer period (of time).

Words with three or more uppercase letter stand for computer-variables. Occasionally, the variables (e.g. "CONTROL") have indices that correspond to the references used in the figures (e.g., α, 201), as in "CONTROL_α", "CONTROL_201" etc.

### Base-stations

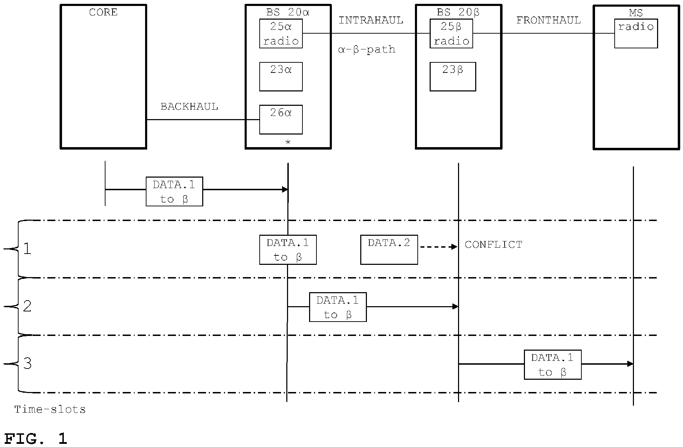

FIG. 1 illustrates two mmWave base-stations 20α and 20β (α ≠ β) of a cellular radio network. The figure also illustrates the concept of time-slots by a swim-lane diagram, shown below the base-stations.

### Time-slots and buffering

The time-slots represents a formal restriction that the description introduces by way of convention: During a single time-slot, BS 20α can use its radio transmitter 25α to communicate a predefined number of content-data packets (e.g., datagrams with header and payload sections). The predefined number is a maximum number.

For simplicity of explanation, this predefined number (or "plurality") of content-data packets is called DATA. The restriction is therefore referred to as 1-SLOT-1-DATA. The same principle applies for BS 20β and transmitter 25β. As used herein, the term "communicating" collectively stands for either receiving or sending the packet.

It is possible to separate the 1-SLOT-1-DATA restriction into predefined maximum numbers of data-packets for sending and for receiving. For simplicity, the description, treats sending and receiving equally.

The nature of the content in the packet does not matter. In a simplified example for explanation, DATA can represent a picture (or "image"). That picture requires a couple of MB (megabyte) data. Further, DATA can be data to conduct phone or video calls, DATA can be data to control vehicles, etc. Communication content data can metaphorically be referred to as "traffic".

The 1-SLOT-1-DATA restriction is convenient for explanation because a computing function that is responsible for scheduling (and for other tasks) is explained in view of the time-slots.

It is convenient to measure time-interval (delays, latency, etc.) by the arbitrary unit SLOT. The time-slots have substantially equal duration of one SLOT. A SLOT has a duration measured in microseconds. Convenient examples are durations in the range between 1 SLOT = 1 ms and 1 SLOT = 10 ms (milliseconds).

It is further convenient to indicate the progress by time-slots t1, t2, t3 and so on, or by time-slots ti in general.

In the example of FIG. 1, the base-stations operate as follows:

BS 20α receives DATA. 1 at any time before t1 (from a higher-order system, for example from the "core" or the "backbone" shown on the left side). The ".1" notation is occasionally added to "DATA" to indicate that the content-data packets substantially remain the same.

BS 20α receives DATA.1 with an indication of a TARGET BS (i.e. an "address"). FIG. 1 simply adds "to β" in the sense that DATA.1 must reach BS 20β (TARGET = β). The person of skill in the art can implement further address information, such as the identification of a particular MS that finally receives DATA. 1.

BS 20α comprises buffer 23α for temporarily storing (i.e., "buffering") one or more content-data packets (such as DATA.1) that it has received. Likewise, BS 20β comprises buffer 23β. Buffers 23α and 23β can be implemented by the mentioned memory, separate for each BS. The buffers can be organized to operate under the first-in-first-out (FIFO) scheme.

In the example, base-station 20α buffers DATA. 1 during t1. Buffering is not necessary in all cases, but the figure introduces buffering here because BS 20α cannot communicate with BS 20β all of the time.

There are many potential reasons for non-communication (during one or more time-slots), among them, for example: (i) The radio link between both base-stations may not be available due to the above-mentioned blocking. (ii) One of the base-station might be busy in communicating DATA with other mobile-stations, or with other base-stations. In an example for the 1-SLOT-1-DATA restriction, BS 20β receives DATA.2 from a further BS (or from a further MS, not specified here in the figure) during t1. As BS 20β cannot receive two DATA per slot, there would be a CONFLICT. The conflict would also arise for BS 20β sending DATA.2 during t1. (CONFLICT can be a binary yes/no variable).

At t2, base-stations 20α and 20β communicate with each other (e.g., base-station 20α is sending DATA. 1, and base-station 20β is receiving DATA. 1).

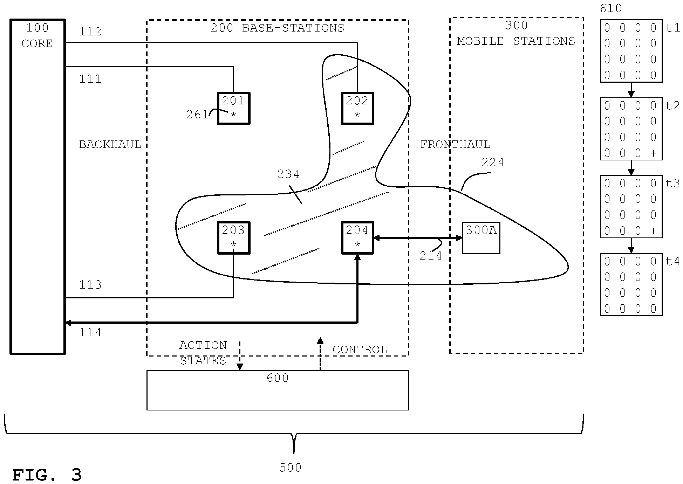

In the example, base-station 20β uses its transmitter 25β to provide a radio link to one or more mobile-stations (cf. FIG. 3 for details) for communicating DATA. In the example, this happens at t3 with DATA. 1. Communicating DATA (by the radio links) between base-stations and mobile-stations is called fronthauling.

### In-range peer base-stations

In their capacity to communicate content-data with each other, both base-stations of FIG. 1 can be regarded as "in-range peer stations". Base-station 20β is the "in-range peer station" to base-station 20α, and vice versa. The qualification to be an "in-range peer station" is relative. In an equivalent notation, two in-range peer stations can be "pairs": IN_RANGE_PAIR = (α, β).

However, base-stations 20α and 20β are equipped with hardware slightly differently: base-station 20α can use further communication unit 26α to provide a so-called backhaul link. This means that BS 20α can communicate with a further system directly (e.g. with the core network). Communication unit 26α can be, for example, a connector to a wire-link (i.e., to a fiber cable or the like) or can be a radio transmitter operating in an alternative wave band (e.g., a WLAN transmitter). The 1-SLOT-1-DATA restriction is not applicable for backhauling.

In the figures, base-stations with backhaul function are also identified by an asterisk symbol *.

### Asymmetrical functionality distribution and intrahauling

However, base-station 20β cannot communicate with the further system, for possible (structural) reasons, among the following: (i) The cable may not be connected to the communication unit. (ii) An alternative radio link may not be available. (iii) BS 20β may not have a communication unit at all.

To symbolize this lack of communication, FIG. 1 shows BS 20β without such a communication unit. In other words, this is just the convention that BS 20β does not have a backhaul link.

Because of such asymmetrical communication functionality, BS 20β must rely on the mentioned "self-backhauling" technique. The description also uses the term "intrahauling". The term "in-range peer-hauling" or "pair-hauling" would be synonyms.

Base-stations perform the intrahaul and fronthaul function within the same frequency band (i.e. called "inband"). There is no need to provide a different frequency band for intrahauling.

In the example, DATA. 1 is communicated via base-station 20α during time slots 1 and 2. In other words, BS 20β communicates with the core system only indirectly. For DATA.2, the figure does not give more details yet, but other figures will show more.

### Meta-Data

Shortly returning to the time-slots, the duration of a time-slot is selected such that - in addition to communicating DATA - the base-stations can also obtain and/or forward meta-data. Meta-data is clocked by the time-slots. Meta-data is differentiated into types such as: state-data, action-data, control-data, and environment-data.

This type differentiation is introduced here for convenience of explanation.

### State-data

State-data is specific to particular base-stations and comprises information regarding the technical state of the particular BS. Optionally, state-data can be differentiated into the state at the beginning of a time-slot or the end of a time-slot.

One sub-type of state-data is buffer-state-data of the BS. For example, BS 20α has BUFFER = 0 DATA in buffer 23α before the start of t1, and has one DATA in buffer 23α during t1. State-date does not have to identify particular DATA. It does not matter if BS 20α stores DATA. 1 or any other packet, state-data is not affected. State-data can be based on counters (DATA is countable).

### Action-data

Action-data is specific to particular base-stations as well and comprises information regarding the communication actions (i.e., sending/receiving DATA) that the particular BS performs during a particular time slot. Therefore, action-data can be regarded as information regarding state transitions. For example, by the action "receiving DATA" before t1, the state of BS 20α changes. Again, the identification of particular DATA is not required.

Action-data is related to buffer-state-data. For example, a BS receiving DATA but not yet sending DATA in the next time-slot increases a DATA counter by one. Sending DATA from the buffer decreases the DATA counter.

### Control-data

Control-data is specific to particular base-stations as well and comprises instructions being forwarded to particular base-stations during particular time-slots. The instructions indicate which actions to take, such as to send or receive DATA at particular time slots (i.e., the time slot that follows immediately, or a particular time-slot in the future). Unless specified otherwise, the instruction "send DATA" refers to DATA just received (cf. t2, BS 20β) or to DATA stored in the buffer for the longest time (FIFO).

Control-data can be differentiate into preliminary and final control-data (PRE/FIN CONTROL). With details to be explained below, a transition from preliminary to final control-data depends on a feasibility check.

### Environment-data

Environment-data is state-data that is not only specific to particular base-stations but also specific in relation to the in-range base-stations of that particular base-station.

A first sub-type of environment-data refers to the existence of in-range peers. In the simplified example of FIG. 1, BS 20α keeps environment-data indicating that BS 20β as an in-range peer (to BS 20α). Likewise, BS 20β keeps data representing its environment to have BS 20α as an in-range peer.

A second sub-type of environment-data (derived from the sub-first type) refers to ability of the in-range peers to be provide intrahaul to a particular target. In the simplified example, BS 20α keeps the information that its in-range peer BS 20β provides an intrahaul path to BS 20β.

A third sub-type of environment-data (derived from the second sub-type) comprises latency information for particular intrahaul paths and particular target base-stations (e.g., PATH

LATENCY).

In the much-simplified example of FIG 1, there is only one intrahaul path (the α-β-path), but the number of potential paths rises non-linearly with the number of base-stations that participate in intrahauling.

The base-stations can obtain environment-data by performing simple tests. Discovery techniques are available to the person of skill in the art (e.g., sending test data, receiving confirmation from in-range peers).

### Meta-data communication

Different to content-data (cf. the mentioned MB per picture), meta-data is relatively small in data volume. For convenience, it can be assumed that collecting or forwarding meta-data requires 1 KB (kilo byte) per type, i.e. approximately 1/1000 less than DATA.

Therefore, meta-data can be communicated by means that do not offer the relatively high bandwith of mmWave networks. It is noted that the mentioned restrictions (in terms of blockage etc.) are less severe for 4G and for 3G networks.

The person of skill in the art can therefore implement meta-data links without the need of further explanation herein. Nevertheless, auxiliary networks are mentioned. For example, LTE network (i.e., 4G) can be the basis for meta-data communication. In that case, the mmWave base-stations can also be implemented as LTE mobile stations. Other networks can also be used, such as WLAN.

It is also contemplated to convey meta-data as payload to DATA, so that the using auxiliary networks are not necessary.

### Latency as a metric for scheduling: path latency

As already mentioned, the logistics behind self-backhauling encounter the NP-hard problem. Scheduling and path selection require (at least) to process state-data and action-data and the identification of the appropriate control-data.

Processing involves the evaluation of metrics (or measurement data). While the description will explain metrics with more detail further below, the latency metric is introduced already here. There is a simple reason: latency values are a basis for decision taking (by the base-stations, or by agents). Or in other words, latency values belong to environment-data of the third sub-type.

As mentioned, in the communication of DATA between BS 20α and the core (in the example before t1), the 1-SLOT-1-DATA restriction does not apply.

Assuming that BS 20α communicates DATA to a particular MS (not shown here), the overall communication time would be a single time-slot.

Assuming that BS 20β communicates DATA. 1 to a particular MS (as shown on the right side of FIG. 1), the overall communication time would comprise t1 (BS 20α buffering DATA.1), t2 (BS 20α sending DATA.1, BS 20β receiving DATA.1), and t3 (BS 20β sending DATA.1), summing up to an overall communication time of 3 time-slots.

As used herein, a BS-particular latency is the overall communication time minus one time-slot. BS 20α has zero latency (due to its backhaul link) and in the example of FIG. 1, BS 20β has a latency of 2 time-slots.

This intrahaul latency is an end-to-end latency, between the backhaul base-station at one end, and the fronthaul base-station at the other end: PATH_LATENCY.

The intrahaul latency can be differentiated according to the direction: backhaul-fronthaul latency or fronthaul-backhaul latency. (Much simplified, and disregarding delays introduced by the backhaul and fronthaul links, the latencies can also be differentiated into down-link latency or up-link latency).

In the example of FIG. 1, DATA.1 goes "back" to "front", along the α-β-path: PATH_LATENCY_α_β

As is however possible to define a latency for the β-α-path (in the opposite direction) PATH_LATENCY_β_α

### Latency as a metric for scheduling: station latency

As buffering can take more than one time-slot, a STATION_LATENCY can also be defined. In the example, BS 20α has STATION_LATENCY_α between zero (nothing buffered) and one (DATA.1 buffered during t1).

### Average latency

As the latency value changes over time, it is also convenient to aggregate multiple latency values (for path latency or for station latency). The person of skill in the art can chose appropriate aggregation techniques, such as
- calculating the average, or calculating the median
- disregarding outliers and calculate average/media
- calculating lower and upper borders of tolerance bands.

As used herein, the abbreviation "AVG" and the quoted term "average" stand for aggregation. The use of so-called sliding windows (i.e., predefined number of slots) is mentioned.

In an example, for AVG_PATH_LATENCY_α_β, a series of (DATA. 1, DATA.2, DATA.3, DATA.4, DATA.5) communication along the α-β-path should have delays at BS 20α of (1, 2, 7, 4, 11) and delays at BS 20β of (0, 0, 0, 0, 0).

AVG_PATH_LATENCY_α_β would be calculated as 2 + 3 + 8 + 5 + 12 divided by 5 (i.e., 6 time-slots). In an example, for AVG_STATION_LATENCY_α is calculated, for example as the average of (1, 2, 7, 4, 11).

### Metrics as environment-data

Latency values can be communicated (meta-data, state-data) between the base-stations. There is no need that every station keeps track of all data, it is enough if a particular station keeps track of its environment, i.e. the in-range peers. In the example, BS 20α keeps track of, for example, AVG_STATION_LATENCY_β and of AVG_PATH_LATENCY_α_β.

### Overview to Computing Function

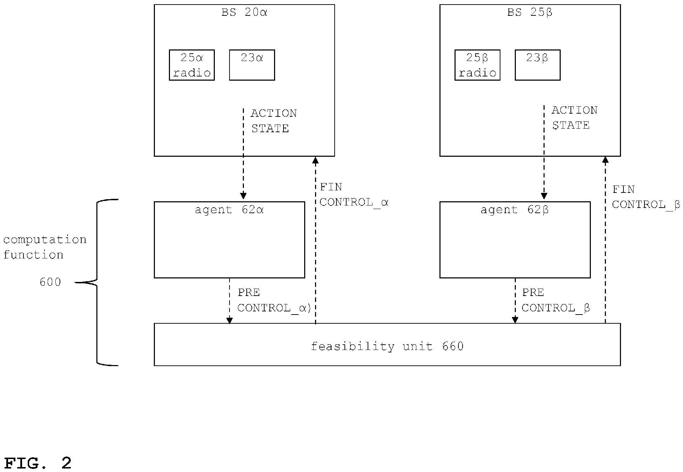

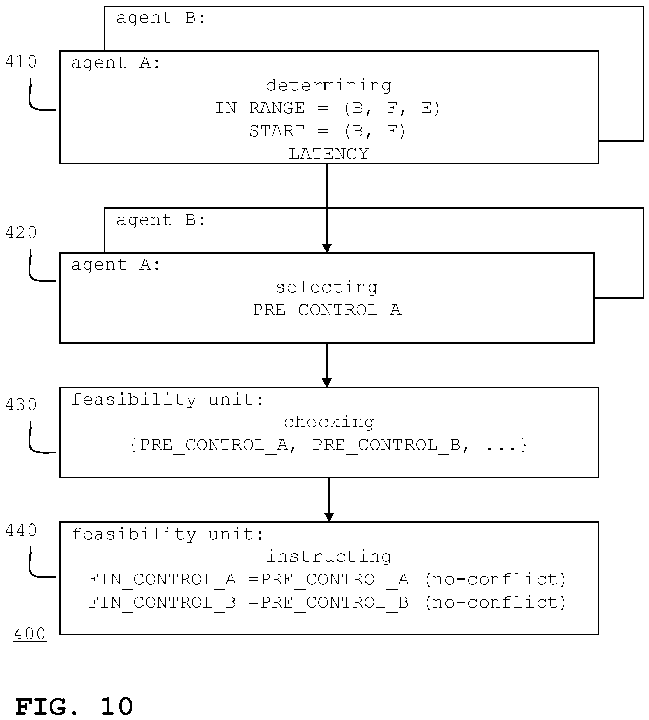

FIG. 2 illustrates base-stations 20α and 20β of FIG. 1 together with computing function 600. Function 600 has two aspects. First, it can be considered as a computer system for controlling mmWave base-stations of a cellular radio network, by performing a computer-implemented method (400 in FIG. 10). Second, computing function 600 is also computer program product that when loaded into a memory of a computer and being executed by at least one processor of the computer causes the computer to perform the steps of the computer-implemented method.

Computing function 600 is adapted to address the NP-problem, not as a comprehensive solution, but with an approach that minimizes average latency values.

Simplified, computing function 600 may have (multiple) base-station related entities (agents 62α/62β), and a (single) network-related entity (feasibility unit 660). In view of the aspects, the agents are distributed parts of the computer systems and the agents are distributed parts of the computer program products.

In the following, computing function 600 is explained if implemented separately from the base-stations. This separation is convenient because the figures show how computing function 600 processes meta-data (by dashed arrows).

It is however possible to implement computing function 600 by the hardware (i.e., the onboard processors and memory) of the base-stations. For example, the agents can be implemented by computer instructions for the processors of the base-stations (separately for each base station). Feasibility unit 660 can be implemented by the hardware of the base-station having the backhaul function.

Base-stations 20α/20β are associated with BS controller units 62α/62β, hereinafter agents 62α/62β. Agent 62α/62β obtains state-data and action-data from BS 20α/20β forwards control-data CONTROL to BS 20α/20β. In the much simplified example of FIG. 2, agents 62α/62β schedule the communication. For example, agent 62α schedules the communication of DATA to BS 20β during t2.

Like a control loop, agents 62α/62β keeps latency values. In this simplified example the latency of BS 20α would be negligible.

Further below, the description will explain that the agents not only schedule the communication but also select the in-range peers in communication paths.

At the network relation, feasibility unit 660 is responsible for a feasibility check of the control-data. Unit 660 obtains the control signals from all agents (in the figure PRE_CONTROL_α and PRE_CONTROL_β).

Feasibility is determined according to predefined rules. In case of feasibility, unit 600 forwards the control-data to the base-stations, otherwise blocks them. The figures note this check by differentiating preliminary control-data {PRE_CONTROL_α, PRE_CONTROL_β}, at the input of feasibility unit 660 and by final control-data {FIN_CONTROL_α, FIN_CONTROL_β} at the output of unit 660.

In other words, PRE CONTROL = FIN_CONTROL is applicable in case of feasibility.

In the much-simplified example, agent 62β may attempt to redirect the communication away from the α-β-path (of FIG. 1) to other intrahaul base-stations, and feasibility unit 660 may prevent this. Preliminary control-data would not be forwarded as final control-data.

Or, for t1, agent 62α may have scheduled to let BS 20α send DATA.1 to BS 20β, and agent 62β may have scheduled to let BS 20β send DATA.2 to some other BS or MS

Feasibility unit 660 would have received {PRE_CONTROL_α, PRE_CONTROL_β}, and would have detected the potential conflict (BS 20β receiving DATA.1 and sending DATA.2 during the same time-slot).

Feasibility unit 660 would have solved that conflict by instructing agent 62α to reschedule (the agent re-scheduled to t2) and by instructing agent to let BS 20β send DATA.2 in that time-slot.

The terminology "instructing an agent to let a BS do" is an umbrella term that also comprises feasibility unit 660 simply forwarding the instruction to the particular BS (without involving the agent).

It is not necessary that feasibility unit 660 blocks all control-data if a single control-data is invalid. This is potentially relevant for networks with many base-stations. For some BS (or rather BS pairs) there might be conflicts, for others not.

### Further base-stations

FIG. 3 is a topology diagram that illustrates communication in communication system 500. Compared to FIGS. 1-2, indices will change from α and β to 1, 2, 3 and 4.

The base-stations have different roles and functions, controlled by computing function 600. The description will also explain the motivation of the approach in view of constraints with more detail.

System 500 provides bi-directional communication of content-data DATA between core system 100 and a plurality of mobile stations 300, via a plurality of base-stations of cellular radio network 200 (or "network 200" in short).

The mobile-stations can be, for example: mobile devices carried by human users, radio equipment attached to vehicles (to assist the operation of the vehicles), Internet access-points, etc.

Solid lines illustrate communication of DATA between stations, and dashed lines illustrate the flow of meta-data (state-, action-, control-, environment-data). The lines can have arrows to indicate directions.

The term "action" refers to an activity of a particular station performed during a particular time-slot, and can be a communication action (sending DATA, or receiving DATA), or a non-communication action (buffering DATA).

In view of the 1-DATA-1-SLOT restriction, sending DATA and receiving DATA is exclusive: a station cannot send DATA and can't receive DATA in the same time-slot. It is however possible, that a station can buffer DATA (in various quantities) while performing the send or receive action.

In the figures, thin solid lines stand for communication that is possible, and bold lines stand for communication that is performed during a particular time-slot and being discussed by the description.

On their right side, FIG. 3 shows action matrices 610, in sequences of consecutive time-slots ti (t1, t2, etc.). In alternative notation, the matrices are called "Xi". Action matrix 610 indicates actions (such as sending or receiving DATA) during particular time-slots ti. Matrix 610 also identifies the base-stations that perform these actions. In implementations, there is no need to show the matrices to users, the matrices are just illustrated to explain aspects of computing function 600.

Computing function 600 can be implemented by one or more computers. The person of skill in the art has the choice to apply the following schemes, alone or in combination:
- Implementing feasibility unit 620 by a computer that is separate to the base-stations, or by a computer that belongs to one of the stations (for example, on the backhaul station)
- Implementing the agents by the processors that are part of the mobile stations, or otherwise.

### Introduction to Networks

System 500 is conveniently illustrated with three major parts. For convenience, these parts are illustrated from left to right. The first part is illustrated here as core system 100. Core system 100 could also be called "backbone network" or "core network". The second part is illustrated here as cellular radio network 200 with a plurality of base-stations 201, 202, 203 and 204. The third part is illustrated here by plurality 300 of mobile stations. Particular mobile-stations are identified by uppercase letters, for convenience, the figure illustrates MS 300A only.

Content-data communication between core system 100 and cellular radio network 200 (i.e., between the first and second parts of system 500) is usually referred to as "backhauling" or simply "backhaul". The figure illustrates backhaul links 111, 112, 113 and 114 between system 100 and base-stations 201, 202, 203 and 204 (of network 200), respectively.

It is noted that the term "back" refers to a logical location relation within system 500, but not to the communication direction (that remains bi-directional). In other words, backhauling comprises core system 100 sending content-data to cellular radio network 200 (in the figure illustrated to the right) and comprises cellular network 200 receiving content-data from core system 100 (to the left).

Taking the direction into account, there is an up-link direction by a fronthaul BS sending DATA to the backhaul BS (via intrahaul), and there is a down-link direction by the backhaul BS sending DATA to the fronthaul BS (via intrahaul).

Controlling by computing function 600 is adaptive to the capability of particular base-stations to perform functions. It is therefore convenient to fine-tune the terminology.

As used herein, any BS having the capacity to provide backhauling is referred to as "backhaul base-station". In the example of FIG. 3, all base-stations 201, 202, 203 and 204 are backhaul base-stations (i.e., they have backhaul links). However, this does not mean that all backhaul base-stations are performing this function all the time.

Content-data communication data between any particular BS (of network 200) and any particular MS (i.e., between the second and third parts of system 500) is usually referred to as "fronthauling" or simply as "fronthaul". The figure illustrates this by fronthaul link 214 between BS 204 and MS 300A.

As used herein, any BS having the capacity to provide fronthauling is referred to as "fronthaul base-station". In the example of FIG. 3, all base-stations are fronthaul base-stations. This does not mean that all fronthaul base-stations are performing fronthauling all the time. In the example, only BS 204 is illustrated as actually performing fronthauling.

This terminology looks at backhauling/fronthauling being functions. A particular BS can have both functions. As already mentioned above, for simplicity of explanation, it is assumed that a BS cannot perform both function within the same time-slot.

It is noted that bypassing cellular radio network 200 is not allowed. The mobile stations (such as MS 300A) cannot communicate with core system 100 directly. In other words, there is no MS with backhauling function.

Usually, the radio connections in the mmWave band are beam connections. The beams have typical 3D (three-dimensional) patterns. In the topology of FIG. 3, the beam patters are not yet illustrated.

For simplicity, FIG. 3 illustrates that the base-stations have communication ranges. The range is illustrated for one BS only: BS 204 has communication range 224.

The person of skill in the art understands that the range is limited in space. Much simplified, the range of a (fronthaul) BS is the physical space in that communicating content-data with a MS is possible. In theory, the range would be different for each particular BS / MS communication. For simplicity of explanation, it can be assumed that the ranges are defined by the base-stations only.

Details regarding the communication range will be discussed below.

As illustrated by a free-hand line for BS 204, communication range 224 can be formed by a couple of beams. At least one beam of BS 204 reaches MS 300A (and likewise, at least one beam of MS 300A reaches BS 204). There is also a beam to BS 202 and a beam to BS 203.

Therefore, BS 204 has two in-range peer stations: BS 202 and BS 203: IN_RANGE_PEER_204 = (202, 203). For simplicity it can be assumed that peer stations can communicate in both directions.

Persons of skill in the art can implement the radio transmitters (of the base-stations) with antennas that allow the adaptation of the beams, so-called beam forming. A suitable technology is to provide antennas with arrays.

Fronthaul link 214 (between BS 204 acting as fronthaul BS and MS 300A) can be usually be established when MS 300A is physically located within communication range 224.

The figure illustrates the operation of system 500 by showing links 114 and 214 with bold lines. System 100 can communicate DATA. 1 to BS 204 during a first time-slot t1. BS 204 can then forward DATA. 1 to MS 300A during a second time-slot t2. In return, MS 300A can send DATA.2 (with a response) to BS 204 during a third time-slot t3, and BS 204 can send DATA.2 to system 100 (using backhaul link 114) during a fourth time-slot t4.

It is noted that the first to fourth time-slots do not have to follow one after another. Delays are possible (including mobile-stations processing DATA to obtain the response). As mentioned, the base-stations comprise buffers.

Backhaul links 111, 112, 113, and 114 are not limited to DATA per single time-slot. In a single time-slot, a backhaul link can communicate multiple DATA to/from core 100.

The figure is simplified, and the reader understands that operation scenarios can be different. For example, MS 300A could physically move so that it receives DATA.1 from BS 204 but sends DATA.2 to BS 202.

It is noted that communication range 224 of BS 204 can be large enough to reach other base-stations (here BS 202 and BS 203 with the beams already mentioned), details for this aspect are explained below. For example - as illustrated by dashed shading lines - communication range 224 extends (with some beams) to intrahaul communication range 234, in the example allowing communication between BS 204 and BS 203 as well as between BS 204 and BS 202. Range 234 is a sub-range of range 224. The base-stations can communicate data to and from their peers via their intrahaul communication ranges.

As used herein, any BS having the capacity to communicate with a further BS (the "in-range peer") is referred to as "intrahaul base-station". This does not mean that all intrahaul base-stations are performing this intrahaul function all the time. The intrahaul base-stations can also be regarded as "self-backhaul base-stations", is it however noted that these base-station act together as peers.

With details to be explained, a particular BS pairs up with other in-range peer station by a selection.

To summarize the FIG. 3 description, according to their functions, the base-stations can be classified into: backhaul base-station(s), fronthaul base-stations, and intrahaul base-stations. Likewise, non-backhaul, non-fronthaul, non-intrahaul base-stations are not able to perform the respective functions.

### Constraints

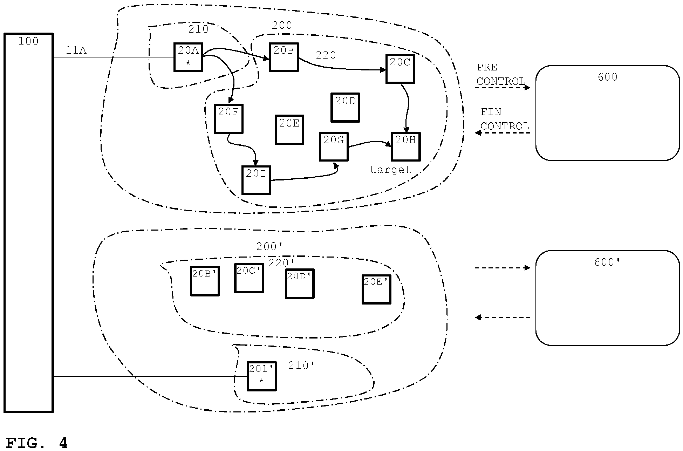

FIG. 4 is a topology diagram that again illustrates data communication over core system, the base-stations and the mobile-stations, but that takes challenges and constraints into account. The index switches to single-uppercase letters.

### Backhauling not omnipresent

Providing backhaul links to all base-stations in cellular radio network 200 may not be possible. The first constraint is therefore the non-availability of backhaul links for some base-stations (or in other words the availability of backhaul links to some base-stations only). Therefore, network 200 comprises non-backhaul base-stations.

To illustrate the functionality that overcomes these limitation, cellular radio network 200 (i.e. being the plurality of base-stations) is differentiated into sub-networks of the plurality of base-stations (by Venn diagrams).

Base-stations that are equipped with backhaul links are base-stations of a first base-station sub-network 210 (i.e., the backhaul base-stations, "backhaul sub-network 210" in short). It is also convenient to call them "fiber base-stations". In the simplified example, backhaul sub-network 210 comprises BS 20A only (cf. the link to network 100).

Base-stations without backhaul links are base-stations of a second base-station sub-network 220 ("intrahaul sub-network 220" in short). In the simplified example, sub-network 220 comprises BS 20A to BS 201. As it will be explained, these base-stations use their peer stations to communicate data with system 100, by using the intrahaul function. In this respect, they are also referred to as "self-backhauling stations".

It is noted that BS 20A is not only a backhaul BS but also an intrahaul BS.

The functionality of base-stations can vary over time. For example, a particular BS can turn into a backhaul BS, or can stop to be a backhaul BS (to become an intrahaul BS). Situations of a particular BS not being a backhaul BS and not being an intrahaul BS are not discussed here. It is however assumed that all backhaul base-stations are also intrahaul base-stations.

### Associations

FIG. 4 also illustrates the concept of association. Base-stations 20B-20I (intrahaul sub-network 220) are associated with BS 20A (backhaul sub-network 210), because BS 20A provides backhaul link 11A to system 100 as a common backhaul link.

As used herein, an association group comprises the base-stations of intrahaul sub-network 220 and the back-stations of backhaul sub-network 210. In the example, FIG. 2 illustrates first association group 210/220.

Likewise, base-stations 20A'-20E' (intrahaul sub-network 220' of network 200') are associated with BS 20A' (backhaul sub-network 210' of network 200') providing a common link as well. The second association group 210'/220' comprises base-stations 20A'-20E'.

The association may change over time, but as used herein, computing function 600 controls association 210/220, and computing function 600' controls association 210'/220'. In other words, every association is controlled by separated instance of the computing function.

The number of base-stations in the associations is N (e.g., N = 9, N' = 5). As FIGS. 3, 5, 6 are much simplified, N is selected as N = 4.

For simplicity, FIG. 4 omits the mobile stations. It is noted that the communication of a particular MS is not limited to a particular association.

FIG. 4 also illustrates communication paths, by way of example. Assuming that BS 20H is the fronthaul station (i.e., the target), there should be a first path PATH_1 = (A, B, C, H) and there should be a second path PATH_2 = (A, F, I, G, H).

Both paths are directed, for the down-link direction ("DATA to H"), DATA is to be communicated from backhaul station 20A to fronthaul station 20H. For both paths, BS 20A keep track of the latency, for example:
- AVG PATH LATENCY (A, B, C, H) = 20 SLOT
- AVG PATH LATENCY (A, F, I, G, H) = 10 SLOT

In the example, the second path has more intermediate base-stations (F, I, G) as the first path (B, C):
- NUMBER INTERMEDIATE (A, B, C, H) = 2
- NUMBER INTERMEDIATE (A, F, I, G, H) = 3

The first path has more DATA in its buffers than the second path:
- DATA BUFFER (A, B, C, H) > DATA BUFFER (A, F, I, G, H)

DATA could go either path. It is also possible that DATA goes a different path.

With the agent for station 20A and the feasibility unit operating in the background, station 20A keeps environment-data that two in-range stations 20B and 20F are available: IN_RANGE_PEER_A = (B, F, E).

Not every in-range peer is also a start station of a path. BS 20E is not a start station (no path to H available).

But station 20B keeps (environment) data that
- START (STATION, LATENCY) = {START (B, 20), START (F, 10)}

Station 20B is the start station of the first path, and station 20F is the start station of the second path. Taking the average path latency values as a decision criterion, station 20A selects station 20F (lower path latency). There is no need for station 20A to know the base-stations of the complete path, just having the start stations with a target-related latency (AVG_PATH_LATENCY) here is sufficient.

As a side-note, for different targets and different paths, the values are different.

Station 20A provides control data "send DATA to 20F" as PRE_CONTROL to unit 620 (cf. FIG. 2). If there is no conflict (cf. FIG. 1), unit 620 allows station 20A to send DATA to 20F (FIN_CONTROL).

A conflict could arise, for example, if station 20F would be busy with receiving (or sending) other DATA.

It is noted that station 20A does not always select the path with lowest latency.

But returning to the communication of DATA. In the next time slot, a decision (with selection by the agent, and with feasibility check by unit 660) has to be performed again. Station 20F has two alternatives as well: In the first alternative, station 20F has IN_RANGE_PEER 201 being also the start station of a path with average latency 10 time-slots (latency to 20H), and has station 20E as the start station of an alternative path with average latency 8 time-slots (latency to BS 20H). BS 20F selects BS 20E to send DATA. There is no need to stay on path (A, F, I, G, H). (The stations even do not have to know the complete path in advance). Assuming that the selection (20F to 20E) is free of conflict (for the current time-slot), DATA goes to station 20E.

This procedure repeats until DATA reaches its destination station 20H. On the way, delay data is collected so that the average delay values can be updated.

While the example of FIG. 4 assumes the absence of conflicts, the description will focus on that conflicts.

### Further challenges

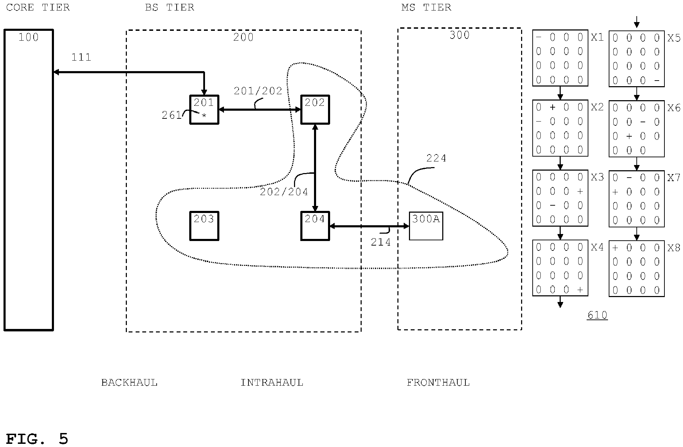

FIG. 5 is a topology diagram that illustrates data communication again, but that takes further challenges and constraints into account.

As illustrated, by way of example, only BS 201 has backhaul link 111 (BS 201 is the backhaul BS), but the other base-stations do not have backhaul links (non-backhaul base-stations). BS 201 belongs to backhaul sub-network 210. BS 202, 203 and 204 belong to intrahaul sub-network 220. In terms of association, BS 201, 202, 203 and 204 belong to association 210/220 (cf. FIG. 2).

Communication with system 100 is possible because the communication ranges do overlap at least partially. As already mentioned by the description of FIG. 3 in the example with communication range 224, BS 204 can use its mmWave radio transmitter to communicate with BS 202 and with BS 203 (not necessarily simultaneously during the same time-slot but at least in different time-slots). In other words, BS 202 and BS 203 are the in-range peers to BS 204.

Further, the communication ranges are selected such that BS 202 can communicate with BS 201 and with BS 204 (in-range peers to BS 202); and BS 203 can communicate with BS 201 and with BS 204. Much simplified, in this example, intrahaul should not be possible along the 201/204 and 202/203 diagonals. The base-stations illustrated in the diagonal line can be considered "peers" because they are all intrahaul stations, but they are not "in-range peers".

In an ideal situation, non-possibility of intrahaul is known to computing function 600 as part of the feasibility check.

Fronthauling is illustrated for BS 204 only, but all base-stations 201-204 should be fronthauling base-stations as well.

Data between BS 201 and BS 202 can be communicated in different paths (or routes): A communication path can be available in direct intrahaul (overlapping range, taking at least a single time-slot) with a single hop. An alternative communication path can be available in indirect intrahaul, via BS 203 and BS 204 (at least 3 hops). It is noted that the 201/202 single-hop intrahaul appears to be the "shortest" path, and that the 202/204/203/201 multi-hop intrahaul appears to be the "longest" path. Due to conflict-avoiding buffering of DATA, the shortest path (NUMBER_INTERMEDIATE) is not necessarily the preference to go.

For the description, data communication between BS 201 and BS 202 serves as an example for explaining the operation of computing function 600. Based on action-data (details below), computing function 600 selects control-data that schedule the actions (such as sending, receiving) for different time-slots.

Regarding the time-slots and the capacity of the base-stations, direct communication of DATA (single-hop intrahaul) takes at least single time-slot and indirect communication of DATA ("via-communication", multi-hop) takes at least two time-slots.

The criterion for selecting a particular path (here 201, 202, or 202, 204, 203, 201) and for selecting time-slots for going along that path is the overall delay (LATENCY PATH). Simplified, the "shortest path" in the number of hops may be the "longest path" in delay, or the "longest path in the number of hops may be the "shortest path" in delay.

Data between BS 201 and BS 203 can be communicated directly (overlapping ranges, single-hop) or via BS 202 and BS 204 (multi-hop intrahaul). Data between BS 201 and BS 204 can be communicated via BS 102 or via BS 103 (multi-hop). Data communication between these base-stations follows the same rule as for BS 201/202.

### Buffering

Computing function 600 cannot anticipate the time DATA arrives (from core system 100 or from MS 300A).

The capability of the base-stations to buffer DATA (or to "queue DATA", in the same meaning) is now discussed. Due to the above-mentioned 1-SLOT-1-DATA restriction, in some situations (such as in case of conflicts) buffering is sometimes required.

To stay with the example of MS 300A, the communication with system 100 is a path that comprises link 214 (radio link, fronthaul), intrahaul links 202/204 and 202/201 (radio link) as well as backhaul link 111 (e.g., implemented by fiber).

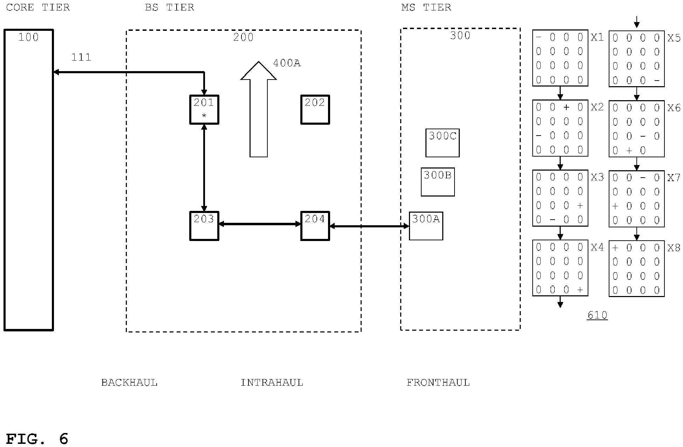

FIG. 6 is the topology diagram in a variation that illustrates non-availability of direct communications between intrahaul base-stations and that also illustrates situations with above-average network communication (or "network traffic" in fronthaul).

In the example, the direct communication between BS 202 and BS 201 (intrahaul) should be blocked, at least temporarily. This is illustrated by obstacle 400A. The arrow symbolizes that the obstacle will disappear (i.e., stay for a couple of time-slots only).

Practical examples for communication blocking comprise: (i) A vehicle moves between two intrahaul base-stations and attenuates their radio signals. (ii) Beams interfere from neighboring intrahaul base-stations. A particular BS decreases its transmission power (i.e., signal strength).

As a consequence of blocking, DATA goes the indirect path (e.g., from BS 201 to BS 203 to BS 204, or vice versa), or DATA is buffered until intrahauling between BS 202 and BS 201 becomes available again. In other words, the "shortest" path is blocked, so that DATA goes a longer path (in the figure also the "longest") or so that DATA just waits.

FIG. 6 also illustrates the second constraint: One or more base-stations have - at least temporarily - and above average demand to communicate DATA. This is illustrated for BS 203 and for BS 204 that communicate with an increased number of mobile stations, 300A, 300B, 300C etc.

Practical examples for increased communication demand comprise: (i) A vehicle stops in physical proximity of a particular BS so that the mobile phones of the passengers (i.e., the mobile-stations) establish connections with the base-stations that are nearby (e.g., BS 202 and BS 204). (ii) At weekends, a road is not used by vehicles, but by pedestrians.

As a consequence of increased demand (i.e., higher quantity of DATA), DATA is distributed over multiple paths (e.g., DATA from BS 204 partly intrahauled via BS 203, partly intrahauled via BS 202), or DATA just waits to be communicated.

FIG. 6 also illustrates the third constraint. Assuming that BS 201 is busy with communicating (fronthaul) data with MS 300C, it can't simultaneously (same time-slot) act as an intrahaul BS. Data to/from MS 300A would have to wait until BS 201 is "free" again.

As mentioned already, buffering data is possible, but buffering increases the propagation delay.

A fourth constraint is mentioned as well: mmWave networks (such as network 200) are expected to have a relatively high variance in the resource availability. Base-stations can be expected to be added or removed (so-called fluctuation). When a base-stations fails, it may not be replaced. The variation in the functions (backhaul, intrahaul) has already been discussed above.

There are further constraints, such as for example, changes in the transmission power (of the base-station transceivers and of the mobile-station transceivers), interferences between radio beams from neighboring base-stations, and others.

### Traditional approach

In traditional approaches, a computer would use input data (i.e. "a priori data" or "meta-data") such as (i) input data regarding existing (or future) communication blocking (e.g. vehicle traffic data that indicates time points when base-stations are expected to be blocked by vehicles), (ii) input data regarding changes of the network configuration (e.g., adding or removing base-stations from network 200, "network dynamics"), (iii) input data regarding the requirement to provide extra intrahauling resources during particular time point (cf. the arrival of a vehicle with passenger mobile stations, data that indicates the number of mobile stations user, input data regarding the amount of DATA), (iv) input data regarding topology (i.e., the availability of particular base-stations to be backhaul stations, intrahaul base-stations etc.

However, input data may not be available and such input data would be related to the above-introduced constraints. In other words, computing would be based on modelling the potential cause. In case that constraints do change, computing would have to be defined again. It is also noted that the computing may not be robust against such changes. Further, the complexity is expected to be NP-hard.

### Alternative approach

To address the constraints and to provide an alternative computing function, the alternative approach is more symptom-oriented. The alternative approach is based on (at least) the following: (i) Controlling the intrahaul function by selecting paths and scheduling data transmissions is based on a Markov Decision Process MDP that take sequential decision making aspect into account (cf. FIG. 4, decisions at the base-stations along the path). (ii) Using machine-learning techniques applied to the MDP with the primary goal to minimize end-to-end latency, and with the secondary goal to accommodate network fluctuations (i.e., robustness against intrahaul base-stations joining or leaving network 200).

### Action Matrices

The description explains the representation of network 200 (at time-slot granularity) by matrices 610 in FIGS. 5-6.

Action matrix 610 (or Xi) represents send/receive activities (base-stations in intrahaul sub-network 220) during particular time slots i.

Such a matrix can represent a potential state change during the next time-slot. A particular BS (that buffers DATA) can send DATA to different base-stations. Much simplified, the particular BS has two (or more options) and the DATA can be forwarded to a first path or to a second path. At the end of the subsequent time-slot, the state has changed (for some base-stations, but therefore network state has changed as well).

At the end of each time-slot, the matrix also represents a state (of each BS), and the state comprises the quantities of DATA being buffered in particular base-stations.

Further, in general, a data counter represents the buffering activities of the base-stations. The quantity of DATA in the buffer can be different for each BS. More in particular, due to the time-slot related data collection, these numbers can be processed to an indicator that roughly corresponds to an "average" end-to-end latency (i.e. the time for DATA to go via intrahaul base-stations between backhaul and fronthaul base-stations). This indicator is an optimization criterion for machine-learning.

In the following, the matrices and the counters are explained with more detail.

### Time-slot matrices

FIG. 5 also illustrates activity matrix 610 that represents communication actions (send/receive) performed by base-station pairs (index jk) during a particular time slot i.

Matrix 610 - in formulas written as "matrix X" - is a quadratic matrix with N x N elements. N is the number of intrahaul base-stations in network 200. This comprises the base-stations of intrahaul sub-network 220 and the (single) BS 201 in backhaul sub-network 210 (that has intrahaul function as well). In the example of FIGS. 3, 5 and 6, the number N is given as N = 4. The matrix indicates the communication between particular base-stations during ti.

As the matric refers to the base-stations that are controlled by the computing function, the mobile-stations are not considered.

The matric elements Xjk are defined for values {-1, 0, +1}. In FIGS. 3-4, the symbol "-" stands (space-saving) for "-1", and the symbol "+" stands for "+1".

The indices jk indicate intrahaul links between pairs of base-stations, that is BS j and BS n. The indices j and k are numbers from 1 to N. Index j stands for a BS that is potentially "sending", and index k stands for a BS that is potentially "receiving" (from BS j). For example, indices 12 identify the link between BS 201 and BS 202.

While the indices jk identify potential activities, the element values indicate activities during a particular time-slot ti.

"+1" stands for the activity of BS j "sending" and - at the same time - BS k "receiving"), and "-1" stands for the activity of BS j "receiving" (and BS k "sending"). "0" stands for the situation in that either sending or receiving is not performed.

As a side note, in case of blockage with BS j sending but BS k not receiving leads to "0". Base-station pairs that are out of range with each other (e.g., the diagonal base-station 201 and 204) have a permanent "0".

For example, X12 = +1 stands for BS 201 sending DATA to BS 202 (during ti), X12 = -1 stands for BS 201 receiving DATA from BS 202 (i.e., negatively sending), and X12 = "0" indicates that both BS are idle (during that slot, no sending, no receiving).

By special convention, a BS being a fronthaul BS (during the ti), is indicated as "+1". For example, BS 204 being active as fronthaul BS is indicated by X44 = "+1".

In the example of FIGS. 5-6, consecutive time-slots are illustrated top-down, left to right.

In FIG. 3, there is no intrahaul communication at all, and the matrix elements would be zero. During t1, BS 204 receives (backhaul) DATA, all X are 0. During t2 and t3, BS 204 acts as fronthaul BS, X44 = +1. During 4, BS 204 sends (backhaul) DATA, all X are 0.

In FIG. 5, there is backhaul, intrahaul, fronthaul, again intrahaul and again backhaul communication. During t1, BS 201 (fronthaul) receives DATA, "-1". During t2, BS 201 (intrahaul) sends DATA to BS 202 "+1", BS 202 receives DATA ("-1"), etc.

As mentioned above, there is no need to show the matrix to a user. It is also possible to let computing function 600 represent the actions otherwise. In a notation similar to programming language, this could be, for example, "12+" for BS 1 sending DATA and BS 2 receiving data.

### Metrics of individual base-stations, with more detail

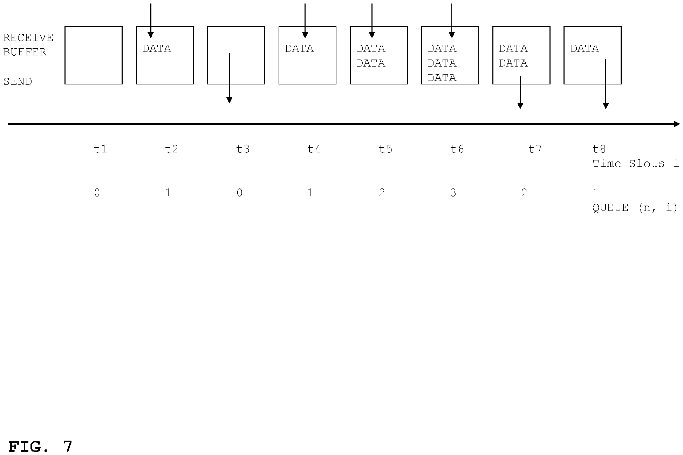

FIG. 7 illustrates a particular base-station BS n performing the communication actions receiving DATA and sending DATA, and performing the non-communication action buffering DATA. The actions are illustrated with consecutive time-slots (from i = 1). The description uses this figure to define metrics that belong to particular base-stations BS n (STATION_LATENCY in general, here with more details). BS n is an intrahaul BS.

Queue metric STATION QUEUE (n, i) is a counter (non-negative integer number, or simply "Q") that represents the number of data items DATA buffered in BS n, at the end of a particular time-slot ti. Therefore, STATION_QUEUE (n, i) also represents the delay: BS n having received new DATA would be able to send that new DATA to an in-peer BS only after STATION_QUEUE (n, i) time-slots have passed. STATION_QUEUE (n, i) is a minimum delay, there might be other factors that cause a further delay (e.g., BS n not be able sending DATA because the receiving BS would be busy). The person of skill in the art can apply other conventions. STATION QUEUE (n, i) is a measure of latency (that the particular BS n contributes) when BS n is part of an intrahaul path. The buffer counter can be regarded as the overall waiting time that the particular BS n adds to the intrahauling function.

AVG_STATION_LATENCY for a particular BS n (or AVG_Q (n, i)) is Q (n, i) is "averaged" over a period of multiple time-slots (e.g., over 100 time-slots before ti).

Maximal BS latency for a particular BS n (or MAX_Q (n)) is the maximal delay measured over a period of multiple time-slots.

Since these metrics are applicable to particular BS n, the BS can use its processor and memory to keep track of these metrics. In other words, Q (n, i), AVG Q (n, i) and MAX Q (n) are available at each BS n.

BS n (n any index from 1 to N) belongs to BS of association 210/220 ("self-backhauling"). Buffering here is illustrated as a first-in-first-out FIFO buffer.

BS n can receive DATA in fronthauling function and in intrahauling function.

To explain the details: At t1, the BS is idle, cf. the "0" in the matrices, the buffer remains empty, with Q (n, 1) = 0. At t2, the BS receives DATA.1 (cf. "-1"). The counter goes up to Q (n, 2) = 1. At t3, the BS sends DATA.1 (cf. "+1"). The counter goes down to Q (n, 3) = 0. At t4, the BS receives DATA.2 (cf. "-1"). The counter goes up to Q (n, 4) = 1. At t5, the BS receives DATA.3 but also keeps previously received DATA.2 in its buffer. The counter goes up to Q (n, 5) = 2. At t6, the BS receives DATA.4 but also keeps previously received DATA.2 and DATA.3 in its buffer. The counter goes up to Q (n, 6) = 3. At t7, the BS sends DATA.2 so that the counter goes down to Q (n, 6) = 2. DATA.3 and DATA.4 remain buffered. At t8, the BS sends DATA.3 so that the counter goes down to Q (n, 6) = 1. DATA.4 remains.

In the much-simplified example of FIG. 7, counter Q (n, i) reaches a maximal value of 3 (DATA items buffered by the BS): Q MAX (n) = 3. The counter has an "average" of AVG_STATION_BUFFER=(0 + 1 + 0 + 1 + 2 + 3 + 2 + 1)/8= 1.25.

The counter also indicates the maximal time (measured in time-slots) a particular item (e.g. DATA.2) was buffered. In the example, DATA.2 is communicated via multiple intra-hops from the BS (in fronthaul) to the BS (sub-network 210, with backhaul list) with a propagation delay of 3 time-slots (introduced by BS n alone).

Looking back to figures that illustrate multiple BS in intrahaul function, there are further communication actions (sending/receiving) and further non-communication actions (buffering). In each ti, there is a different buffer-state (of sub-network 220, optionally in sub-network 210 as well).

A state S (for sub-network 210) can be defined as a vector S(i) = {Q (1, i), Q (2, i)... Q (N, i)}, for each ti. The state S would vary from time-slot to time-slot.

In the much simplified example of FIG. 3, at the end of t1, BS 1 (BS 201 in FIG. 3) buffers DATA so that S(1) = {1, 0, 0, 0}. In the next time-slot, BS 1 sends DATA to BS 2 so that the state changes to S(2) = {0, 1, 0, 0}. In the next-time-slot, BS 2 sends DATA to BS 4 so that the state changes to S(3) = {0, 0, 0, 1}. Next, BS 4 sends DATA to MS 300A (not being considered herein the state), so that S(4) = 0, 0, 0, 0}.

In operation of network 200 (more in particular sub-network 220), there are base-stations that potentially buffer DATA. A so-called size |S| (of the state space) is introduced as the product Q MAX (n) from n = 1 to N. The size rises with the number of stations.

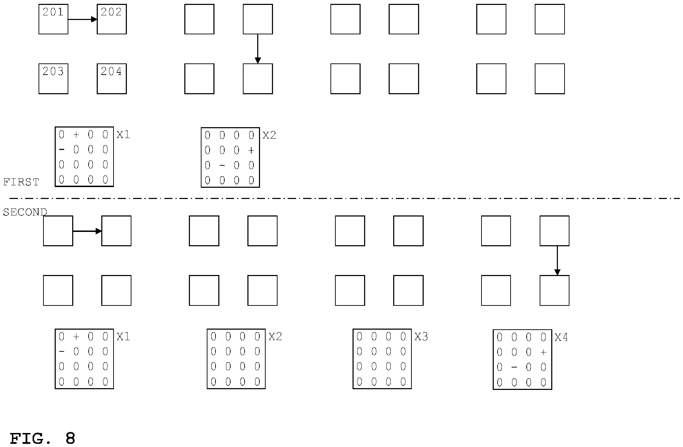

FIG. 8 illustrates path selection and scheduling by a sequence of topology diagrams and action matrices.

The intrahaul path is the sequence of intrahaul BS that DATA goes between the backhaul BS and fronthaul BS.

For communication from core network 100 to the MS, the BS with backhaul function (e.g., BS 201) is the source station, and the BS with fronthaul function (e.g. BS 204 at MS 300A) is the target BS. For communication from MS to core, the source BS and the target BS are reversed.

A selection and scheduling solution X is defined as the sequence of X = [X1, ...,XI], with XI representing that last action (by that DATA reaches its target BS). The number I of time-slots can vary. It is noted that I is equal to (or larger than) the number of intrahaul hops.

It is noted that X = [X1, ...,XI] is not only a selection of the path (the identification of intrahaul base-stations) but also a scheduling selection (explained by buffering).

The notation with X is convenient for explanation. Computing function 600 forwards control-signals to the base-stations (of association 201/220) accordingly.

In the example of FIG. 7, DATA should be communicated from BS 201 to BS 204 (cf. FIGS. 3-4). In a first example, computing function 600 schedules the following: In t1, BS 201 sending DATA to BS 202, this being action X1 (cf. the corresponding matrix). In t2, BS 202 sending DATA to BS 204, this being action X2 (cf. the corresponding matrix)

In the second example, computing function 600 schedules the following: In t1, BS 201 sending DATA to BS 202, this being action X1. In time-slots 2 and 3, BS 202 just buffering DATA, this being actions X2 and X3 (cf. the zeros in the matrix). In t4, BS 201 sending DATA to BS 202, this being action X4.

The end-to-end latencies Tn(X) (i.e. back-and-fronthaul latencies, PATH_LATENCY) depend on the particular sequence X = [X1, ...,XI].

In this simplified example, there are end-to-end latencies (source BS to target BS) of Tn(X) = 2 time slots (or 4 time-slots 4 for the second example). Further, in the second example, Q (2, i) increases to 1, to 2.

In this simplified scenario, the preference would be with X = [X1, X2] but not with X = [X1, X2, X3, X4]. However, in real implementations, associations 210/220 are not with N = 4 base-stations, but with dozens of them. Also, in principle, end-to-end latency values can be measured for all base-stations because all of them are also fronthaul base-stations.

Since one end is the (single) backhaul BS, the end-to-end-latency Tn(X) can be defined for all (front-haul) base-stations. In the example of FIGS. 3-4, there would be T1 (X), T2 (X), T3 (X), and T4 (X). T1 (X) would be zero, because BS 201 is the backhaul BS. X varies over time. Therefore, Tn (X) varies over time as well, being a stochastic value.

Measuring Tn(X) is possible without the need of further explanations herein.

Computing function 600 - that selects X - uses Tn(X) to calculate the following "average" end-to-end-latency T_AVG = 1/N ^{∗} SIGMA Tn(X):

### Example

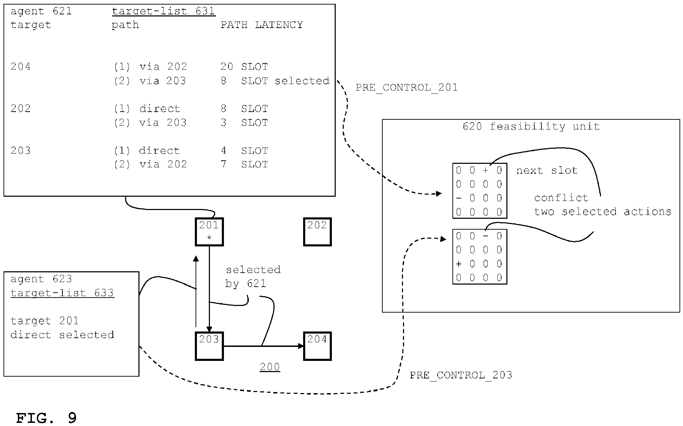

FIG. 9 illustrates the operation of two agents 621/623 and feasibility unit 620 of the computing function by way of example.

In network 200, agent 621 is associated with BS 201, and the agent is associated with BS 203. Agent 621 keeps target-list 631 of base-stations. A target BS is either the fronthaul BS that receives DATA (as in the example, down-link direction) from the backhaul BS (here: 201) or the backhaul BS that receives DATA from a fronthaul BS (not illustrated here, up-link direction).

Target-list 631 identifies particular target base-stations that can be reached via available intrahaul paths and the corresponding PATH LATENCY values. There is no need to indicate the paths completely. Indicating the start BS of the paths is sufficient. The latency value can conveniently be given as AVG_PATH_LATENCY.

According to the target-list of agent 621, target BS 204 can be reached (from BS 201) via BS 202 (being the start-station of first path (1) with 20 slots latency) or via BS 203

(being the start-station of second path (2) with 8 slots latency). Target BS 202 can be reached via BS 203 (in 8 slots) or directly in (3 slots) (the direct path from BS 202 to BS 203, without peer stations in-between). The time-slot examples are just taken to point out that the direct path (or the shorter path) might not be the fastest path. Target BS 203 can be reached directly (4 slots), or via BS 202 (7 slots).

According to the target-list of agent 623, target BS 201 can be reached directly. Latency information is not available.

The other base-stations (i.e. their agents) have target-lists as well.

### Conflict resolution

By way of example, conflict resolution by feasibility unit 660 is now explained.

Assuming that BS 201 has received DATA. 1 (addressed to BS 204) and agent 621 has selected the path at start BS 203 (due to smallest expected latency, 8 slots, not 20). Preliminary control-data is forwarded to feasibility unit 620. This is illustrated here in the matrix notation (i.e., PRE_CONTROL_201 = "send to BS 203").

BS 203 uses target-list 633. Assuming that at the same time, BS 203 has received DATA.2 (addressed to BS 201), agent 623 has no alternatives for selection and provides preliminary control-data for BS 203 sending to BS 201. (The control-data does not have to identify what DATA to send). Again in matrix notation, unit 620 has received the control-data (i.e., PRE_CONTROL_203 = "send to BS 201).

There is however a conflict: BS 203 would be scheduled to send DATA.1 and to receive DATA.2 in the same time-slot. The 1-SLOT-1-DATA restriction is the rule that prohibits this.

The conflict is illustrated here by the first matrix rows showing entries. In a different notation, the entry "+1" and the entry "-1" can be amount-normalized to "1", and simply summing up both matrices lead to "2" in one of the elements. This would indicate the conflict as well (i.e., row or column with entries for more than one action). Two communication actions for the same time-slot by the same BS is not allowed.

There is no need that the matrices have to be forwarded to feasibility unit 660 completely (i.e., 4x4), communicating the preliminary control-data is sufficient.

There are some options to solve the conflict, among them the following: (i) Feasibility unit 660 converts PRE_CONTROL_201 to FIN_CONTROL_201 for BS 201 only, it thereby blocks the scheduled action by BS 203. The same principle can be applied vice versa. (ii) Feasibility unit 660 converts PRE_CONTROL to FIN_CONTROL for BS 201 only, and modifies the control-data for BS 203 by letting BS 203 wait for at least one time-slot. In other words, the conflicting actions would be scheduled to consecutive time-slots.

### Partial paths

As explained, PATH_LATENCY is taken for complete paths between backhaul and fronthaul stations. It is however possible to use partial latency values, so that latency values can be considered (cf. the target lists in FIG. 9) for "intrahaul only" base-stations. For example, the PATH_LATENCY (A, B, C, H) in FIG. 4 is an overall (i.e., end-to-end) latency, but PARTIAL LATENCY (B, C, H) would be a partial path latency.

### Learning

As in the examples, the agents select the paths according to PATH_LATENCY. In most situations, the agents take the path with the lowest latency.

In the example of FIG. 4, BS 20A (i.e., its agent) selected the path with BS 20F as the start station, because of the lower path latency. In other words, the path (A, F, I, G, H) has been determined in the past (historic data) as a path with a selection preference. However, the performance of the path may deteriorate (i.e., the latency can increase). There can be different reasons, among them the circumstances explained with FIG. 6 (e.g., obstacles, or increasing demand from the mobile-stations, etc.)

It is therefore contemplated to use alternative paths, from time to time. More in detail, BS 20A may ignore the path A, F, I, G, H from time to time and send DATA to an alternative path, even if the latency values of the alternative path is higher.

Using alternative paths may also be advantageous because state-data such as PATH_LATENCY, STATION_LATENCY etc. can be refreshed. Potentially the circumstances have changed so that a long-latency path turns into a short-latency path, and vice versa

In other words, the base-stations are allowed to take alternatives. The effect of taking alternatives is measured for an easy to obtain metric: the overall latency of the network.

This overall parameter can be considered as a goal (in the sense of a control loop) and can be defined in a variety of ways, for example:
- NETWORK_LATENCY = SUM OF AVG_PATH_LATENCY (for all intrahaul paths)
- NETWORK_LATENCY = SUM OF AVG_STATION_LATENCY (for all N base-stations with intrahaul function).

The person of skill in the art can modify the formulas.

Since the alternatives are taken by the base-stations (under control of their agents), the agents can be considered as learning agents that are continuously being trained.

### Method

FIG. 10 illustrates a flow chart diagram of computer-implemented method 400 for operating mmWave base-stations that belong to a cellular radio network (cf. network 200). As explained, in the network, one base-station has a backhaul function, and one base-station has a fronthaul function without having a backhaul function. Method 400 is performed by the computing function (with the agents, and with the feasibility unit). The exemplary references refer to FIG. 9.

To illustrate performance of steps 410 and 420 for particular base-stations (i.e., by the agents, simultaneously), the figure illustrates these steps by overlapping boxes.

For a particular base-station (e.g., BS 201), the computing function collects 410 path-specific end-to-end latency values that are specific for a first backhaul-fronthaul path (e.g., path with base-stations 201, 202, 204) having first start base-station (e.g., BS 202) and for a second backhaul-fronthaul path (e.g., path with base-stations 201, 203, 204) having a second start base-station (e.g., BS 203), respectively. The particular base-station (e.g., BS 204) and the first and second start stations (e.g., base-stations 202, 203) have overlapping communication ranges (i.e., IN_RANGE).

The computing function performs collecting 410 for a further particular BS. In the example of FIG. 9 this would be BS 203.

For the particular base-station (e.g., 201), the computing function performs selecting 420 to provide a selection of one of the first and second start base-stations (e.g., base-stations 203, 204) as the recipient for a data-packet (DATA), based on the path-specific end-to-end latency values. In the example of FIG. 9, the SELECTED_STATION would be BS 203 (cf. PRE_CONTROL_201 with the matrix above).

The computing function performs selecting 420 for the further particular BS (here: BS 203) as well, resulting for example in PRE_CONTROL_203 with the matrix below).

The next step 430 and 440 are performed for cellular radio network 200 (i.e., for the association explained in FIG. 4, with BS 20A=BS 201).

The computing function (i.e., the feasibility unit) obtains 430 the selection of the particular base-station and the selection of at least a further particular base-station. FIG. 9 illustrates this with PRE_CONTROL_201 and PRE_CONTROL_203.

The computing function performs 430 the feasibility check of the selections. In the absence of conflicts between the selections, the computing function instructs 440 the particular base-stations (here: 204, 203) to send a data-packet to their selected start base-stations. FIG. 9 illustrates the situation with a CONFLICT, the conflict-free scenarios have been explained above, with FIGS. 1, 4, 5 etc.

### Detailed method

More in detail and by exemplary reference to some of the figures, computer-implemented method 400 can be described as a method for controlling a cellular radio network 200 having mmWave base-stations 20α, 20β, 201, 202, 203, 204 with radio transmitters 25α, 25β. In each base-station 20α, 20β, 201, 202, 203, 204 the radio transmitters are configured to communicate (a plurality of) content-data packets - DATA- by either receiving or sending DATA during a single time-slot, and to temporarily store one or more DATA that it has received, during a sequence of multiple time-slots. For communicating DATA, the base-stations perform functions as follows.

A backhaul base-station is a base-station 20α, 201 that use a communication unit 26α, 261 to provide backhaul link 111 to core system 100. The fronthaul base-station is base-station 204 that uses its transmitter 224 to provide radio link 214 to one or more mobile-stations 300A, and at least two intrahaul base-stations are base-stations 201, 202, 203, 204 that use their transmitters to provide radio links 201/202, 202/204 to peer intrahaul base-stations within common communication ranges.

The functions are being performed sequentially to communicate DATA from the backhaul base-station 201 to a particular fronthaul base-station 204, via at least some of the intrahaul base-stations 201, 202, 203, 204. Method 400 is implemented by computing function 600, in that agents are assigned to the base-stations 20α, 20β, 201, 202, 203, 204 in one-to-one relations, with particular agents assigned to particular base-stations, in that a feasibility unit is assigned to all base-stations in the cellular radio network.

Each particular agent, obtains end-to-end latency values of its particular base-station 201, 202, 203, 204 when acting as fronthaul station 201, 202, 203, 204, the end-to-end latency values being path-specific for different backhaul-fronthaul paths, and the distribute end-to-end latency values to other agents.

Each particular agent identifies peer base-stations with overlapping communication range: the in-range base-stations.

Each particular agent, upon its particular base-station receiving DATA having a specified fronthaul base-station 204 as target, identifies at least two paths 202/204, 203/204) with in-range base-stations, the paths leading from the particular base-station to the target and having different in-range peer-base-stations as start base-stations. The agents is selecting a particular path according to the end-to-end latency values of the fronthaul station being the target of the particular communication, and is generating preliminary control-data for causing the particular base-station during a particular time-slot in the future to send DATA to the start base-station of the selected particular path.

The feasibility unit collects the preliminary control-data (PRE_CONTROL) from all agents, performs a conflict check, and forwards the preliminary control-data as final control-data FIN_CONTROL to the intrahaul base-stations.

### Generic Computer

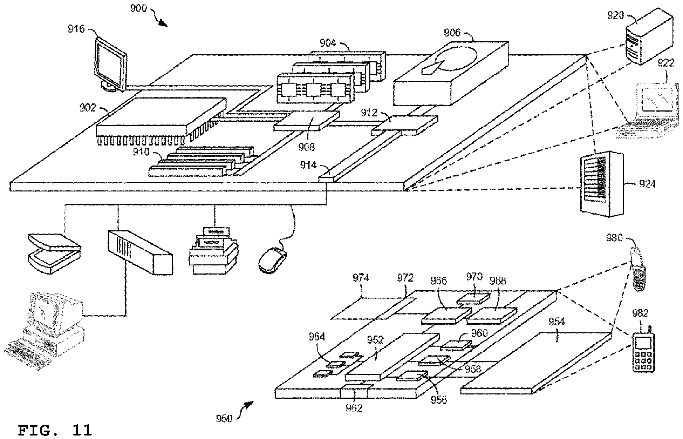

FIG. 11 illustrates an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic computer device may implement the computing function. Computing device 950 is intended to represent various forms of mobile devices, such as personal digital assistants, cellular telephones, smart phones, and other similar computing devices. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. Computer-implemented method (400) for operating mmWave base-stations (20α, 20β, 201, 202, 203, 204) that belong to a cellular radio network (200), wherein one base-station has a backhaul function, and one base-station has a fronthaul function without having a backhaul function, the method (400) comprising:
for a particular base-station (201), collecting (410) path-specific end-to-end latency values that are specific for a first backhaul-fronthaul path (201, 202, 204) having first start base-station (202) and for a second backhaul-fronthaul path (201, 203, 204) having a second start base-station (203), respectively, wherein the particular base-station (204) and the first and second start stations (202, 203) have overlapping communication ranges (224);
for the particular base-station (201), selecting (420) one of the first and second start base-stations (203, 204) as the recipient for a plurality (DATA) of data-packets, based on the path-specific end-to-end latency values; and
for the cellular radio network (200), obtaining (430) the selection of the particular base-station (204) and the selection of at least a further particular base-station (203), and
performing a feasibility check (430) of the selections; and - in the absence of conflicts between the selections - instructing (440) the particular base-stations (204, 203) to send the plurality (DATA) of data-packets to their selected start base-stations.

2. Method according to claim 1, wherein collecting the path-specific end-to-end latency values is performed by accumulating latency data when the pluralities of data-packets are being communicated between the base-stations along the backhaul-fronthaul path.

3. Method according to any of the preceding claims, wherein instructing (440) the particular base-stations (204, 203) to send the plurality (DATA) of data-packets comprises to send the plurality (DATA) with a number of data-packets that is limited to a predefined maximum number.

4. Method according to claim 3, wherein the feasibility check is performed according to a restriction that allows the base-stations in one time-slot to send a single plurality (DATA) of content-data packets only.

5. Method according to claim 4, wherein the feasibility check is performed according to the further restriction that allows the base-stations in one time-slot to either send a single plurality or to receive a single plurality of content-data packets.

6. Method according to claim 5, wherein the feasibility check is performed by processing the selections in a matrix that keeps potential send or receive actions between base-stations so that a conflict is detected when at least a single matrix row or at least a single matrix column has entries for more than one action.

7. Method according to claim 6, wherein in case of conflict, actions are scheduled to consecutive time-slots.

8. Method according to any of the preceding claims, wherein the steps collecting (410) and selecting (420) are performed by base-station related entities - the agents - and wherein the steps obtaining (430) and instructing (440) are performed by a network-related entity - the feasibility unit.

9. Method according to claim 8, wherein the agents select the start stations of the paths according to the end-to-end latency values by learning with an optimization target that is related to the overall latency of the network (200).

10. Computer system (600) for controlling mmWave base-stations (20α, 20β, 201, 202, 203, 204) of a cellular radio network (200) in that one base-station has a backhaul function, one base-station has a fronthaul function without having a backhaul function, the computer system (600) configured to perform a method (400) according to any of claims 1-9.

11. The computer system (600) according to claim 10, wherein the agents that performs the steps collecting (410) and selecting (420) are implemented separately by the hardware of the base-stations.

12. The computer system (600) according to claim 11, wherein the feasibility unit (660) is implemented by the hardware of one of the base-stations.

13. The computer system (600) according to claim 12, wherein the feasibility unit (660) is configured to perform the steps obtaining (430) and instructing (440), and is implemented by the hardware of the base-station having the backhaul function.

14. The computer system (600) according to any of claims 10-13, being adapted to transmit meta-data that supports the performance of the collecting (410), selecting (420), obtaining (430) and instructing (440) step by using an auxiliary network.

15. Computer program product that - when loaded into a memory of a computer and being executed by at least one processor of the computer - causes the computer to perform the steps of the computer-implemented method (400) according to any of claims 1-9.
